# EUROPÄISCHE PATENTSCHRIFT

(11) **EP 3 278 967 B1**
(45) Veröffentlichungstag und Bekanntmachung des Hinweises auf die Patenterteilung: **04.10.2023**
(21) Anmeldenummer: 17184203.2
(22) Anmeldetag: 01.08.2017
(51) Int. Cl.: B29D 99/00, B29C 65/50, B29C 65/00, E04B 1/68, E06B 1/62, B29L 31/26

(54) **VERFAHREN UND VORRICHTUNG ZUM HERSTELLEN EINES DICHTBANDES**
METHOD AND DEVICE FOR MANUFACTURING A SEALING TAPE
PROCÉDÉ ET DISPOSITIF DE FABRICATION D'UNE BANDE D'ÉTANCHÉITÉ

(30) Priorität: 01.08.2016 DE 102016114227
(43) Veröffentlichungstag der Anmeldung: 07.02.2018
(73) Patentinhaber: Tremco CPG Germany GmbH, 92439 Bodenwöhr (DE)
(72) Erfinder: Komma, Markus, 93133 Burglengenfeld (DE); Eidenhardt, Thomas, 92436 Bruck (DE)
(74) Vertreter: Hannke Bittner & Partner mbB Regensburg

(56) Entgegenhaltungen:
- EP-A1- 2 990 551
- EP-A1- 2 990 552
- EP-A1- 2 990 553
- EP-A1- 3 150 366
- DE-U1-202014 104 934
- US-A- 2 891 288
- US-A1- 2005 067 092

## Beschreibung

Die vorliegende Erfindung bezieht sich auf ein Verfahren und eine Vorrichtung zum Herstellen eines Dichtbandes und insbesondere eines Dichtbandes für den Baubereich. Derartige Dichtbänder sind aus dem Stand der Technik in verschiedensten Ausführungsformen seit langem bekannt. Unter anderem bekannt sind auch Dichtbänder, welche zwei Schaumstoffstreifen aufweisen, zwischen denen ein Dichtelement, wie etwa ein doppelseitiges Klebeband, angeordnet ist. Dieses Dichtband kann dabei als Dampfsperre oder dergleichen dienen. Zur Herstellung derartiger Dichtbänder ist es bekannt, dass in einem Schaumstoffträger Längsschnitte angebracht werden und in diese so erzeugten Schnitte wiederum ein Folienmaterial eingelegt wird. Zu diesem Zweck ist es beispielsweise möglich, dass in die Schnitte mittels eines Einführschwertes ein entsprechendes Folienelement eingeführt wird.

Ein solches Verfahren, bei welchem ein Dichtelement in einen durch einen Schnitt erzeugten Zwischenraum zwischen zwei benachbarten Schaumstoffstreifen eingebracht werden muss, ist beispielsweise aus der nachveröffentlichten Druckschrift EP 2 990 551 A1 bekannt.

Eine Vorrichtung, welche ein Klebemittel in einen aufgeweiteten Einschnitt eines Fiberglaskörpers einbringt, ist aus US 2005/0067092 A1 bekannt.

Ebenso offenbart die Druckschrift EP 3 150 366 A1 ein Verfahren und eine entsprechende Vorrichtung, bei welcher ein Einschnitt in eine Schaumstoffbahn zur Ausbildung separater Schaumstoffstreifen eingebracht wird. Diese werden lokal komprimiert, um in den entstehenden Zwischenraum eine Trennschicht einzubringen. Dabei kann es sich beispielsweise um ein doppelseitiges Klebeband handeln.

Die Druckschrift US 2 891 288 offenbart eine Vorrichtung und ein Verfahren zur parallelen Herstellung länglicher Schaumstoffprofilkörper. Dabei ist vorgesehen, zunächst einen Schaumstoffvorprodukt herzustellen, welches durch zwei senkrecht zueinander durchgeführte Schnitte entlang der Längsachse in vier der gewünschten Schaumstoffprofilkörper getrennt wird. Die dadurch erhaltenen Schaumstoffprofilkörper werden voneinander weggeführt und separat voneinander weiterverarbeitet.

Aus der DE 20 2014 104 934 U1 ist ein Dichtband zur Abdichtung einer Fuge zwischen zwei Bauteilen bekannt, welches einen Schaumstoffkorpus mit einem Einschnitt aufweist, in welchem eine über eine Seitenfläche des Schaumstoffkorpus hinausragende Putzbegrenzungseinrichtung eingesetzt ist.

Allerdings ist die Einführung dieses Folienelementes hierbei vergleichsweise aufwendig, da die erzeugten Schnitte üblicherweise nur eine relativ begrenzte Breite aufweisen.

Der vorliegenden Erfindung liegt daher die Aufgabe zugrunde, die Herstellung eines derartigen Dichtbandes zu verbessern. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zur Herstellung eines Dichtbandes wird ein Schaumstoffträger in einer vorgegebenen Transportrichtung transportiert und in diesen Schaumstoffträger wird wenigstens ein Schnitt eingebracht, der sich in dieser Transportrichtung erstreckt. Weiterhin werden durch diesen Schnitt wenigstens zwei voneinander vollständig getrennte Schaumstoffträgerstreifen erzeugt. Dies bedeutet, dass bevorzugt der Schaumstoffträger vollständig durchschnitten wird. Durch den Schnitt entstehen somit mindestens ein erster Schaumstoffträgerstreifen und ein zweiter Schaumstoffträgerstreifen.

Erfindungsgemäß wird ein Abstand zwischen dem ersten Schaumstoffträgerstreifen und dem zweiten Schaumstoffträgerstreifen erhöht, indem wenigstens einer dieser beiden Schaumstoffträgerstreifen wenigstens zeitweise in einer anderen Richtung transportiert wird als der andere Schaumstoffträgerstreifen. Insbesondere ist dabei vorgesehen, dass mindestens einer der Schaumstoffträgerstreifen derart wenigstens zeitweise in einer anderen Richtung transportiert wird als der andere Schaumstoffträgerstreifen transportiert wird, dass sein Querschnittsprofil senkrecht zur Transportrichtung im Wesentlichen unverändert bleibt. Eine Änderung der Transportrichtung beispielsweise nur einer Seitenfläche eines Schaumstoffträgerstreifens, welche z.B. zu einer Komprimierung des Schaumstoffträgerstreifens führen würde, ist dabei nicht vorgesehen. Eine zeitweise Komprimierung eines oder mehrerer Schaumstoffträgerstreifen ist jedoch nicht ausgeschlossen. Eine geringe und lokal begrenzte Komprimierung kann beispielsweise im Bereich einer Umlenkung eines Schaumstoffträgerstreifens zeitweise auftreten.

Es wird also im Gegensatz zu dem Stand der Technik vorgeschlagen, dass nach Einbringen des Schnittes nicht die so entstandenen Schaumstoffträgerstreifen in der gleichen Richtung weiterbewegt werden, sondern, dass bewusst diese mindestens zwei durch den Schnitt entstandenen Schaumstoffträgerstreifen in unterschiedlichen Richtungen bzw. in teilweise unterschiedlichen Richtungen weiterbewegt werden, um so den Abstand zwischen mindestens zwei Schaumstoffträgerstreifen zu erhöhen. Durch diese Erhöhung des Abstandes ist es leichter möglich, ein Element, wie etwa ein Folienelement, an dem einen oder dem anderen Schaumstoffträgerstreifen anzubringen. Allgemein wird durch dieses Entfernen der mindestens zwei Schaumstoffträgerstreifen voneinander eine weitere Bearbeitung erleichtert.

Insbesondere wird zwischen mindestens zwei Schaumstoffträgerstreifen ein Abstand in einer zu der Transportrichtung senkrechten Richtung erhöht. Vorteilhaft weist der Schaumstoffträger auch eine Breitenrichtung auf, welche bevorzugt senkrecht zu der Transportrichtung steht. Ein Abstand der mindestens zwei Schaumstoffträgerstreifen wird insbesondere in einer Richtung erhöht, welche senkrecht zu einer Ebene steht, welche durch die Transportrichtung einerseits und die Breitenrichtung andererseits gebildet wird. Es wäre jedoch auch möglich, diesen Abstand gerade in der Breitenrichtung zu erhöhen.

Bei einer weiteren bevorzugten Ausführungsform wird sowohl der erste Schaumstoffträgerstreifen als auch der zweite Schaumstoffträgerstreifen in einer entsprechend anderen Richtung (bezogen auf die ursprüngliche Transportrichtung) transportiert. So kann beispielsweise der erste Schaumstoffträgerstreifen bezüglich einer von der Breitenrichtung und der Transportrichtung aufgespannten Ebene nach oben bewegt werden und der zweite Schaumstoffträgerstreifen nach unten. Auf diese Weise kann erreicht werden, dass beide Schaumstoffträgerstreifen insgesamt um die gleiche Weglänge geführt werden, was gegebenenfalls ein späteres Wiederzusammenführen der beiden Schaumstoffträgerstreifen erleichtert.

Bevorzugt werden die Schaumstoffträgerstreifen, nachdem der Abstand zwischen diesen erhöht wurde wenigstens abschnittsweise wieder in einer zu der ursprünglichen Transportrichtung parallelen Richtung transportiert.

Erfindungsgemäß werden die Schaumstoffträgerstreifen nachdem sie voneinander entfernt wurden, wieder zusammengeführt.

Erfindungsgemäß wird an wenigstens einer Außenoberfläche wenigstens eines der mindestens zwei Schaumstoffträgerstreifen ein Material angebracht. Bevorzugt wird dieses Material nach einer Erhöhung des gegenseitigen Abstandes zwischen mindestens zwei Schaumstoffträgerstreifen angebracht. Unter dem Abstand zwischen zwei Schaumstoffträgerstreifen wird insbesondere ein Abstand zwischen denjenigen Flächen, welche durch den (mindestens einen) Schnitt entstanden sind, verstanden. Diese Erhöhung des Abstandes kann - wie oben erwähnt - in unterschiedlicher Weise erfolgen. Bevorzugt erfolgt diese Erhöhung des Abstandes dadurch, dass die mindestens zwei durch den Schnitt entstandenen Schaumstoffträgerstreifen in der senkrecht zu der Transportrichtung und der Breitenrichtung stehenden Richtung voneinander entfernt werden.

Durch dieses voneinander Entfernen der beiden Schaumstoffträgerstreifen werden insbesondere diejenigen Oberflächen, welche durch das Schneiden entstanden sind, für eine weitere Bearbeitung und insbesondere für die Anbringung des Materials zugänglich. Bevorzugt handelt es sich dabei bei derjenigen Oberfläche, welche mit dem Material behandelt wird bzw. an der das Material angebracht wird, um eine Seitenfläche und insbesondere eine Seitenfläche, welche durch den besagten Schnitt entstanden ist.

Bei einem weiteren bevorzugten Verfahren ist das Material aus einer Gruppe von Materialien ausgewählt, welche Folienstreifen, Klebebänder, Klebebandstreifen oder klebstoffartige flüssige Medien enthält. Besonders bevorzugt handelt es sich bei dem Material um ein doppelseitiges Klebeband. Dieses Material wird bevorzugt zunächst an einem der beiden Schaumstoffträgerstreifen angeordnet. In einem weiteren Verfahrensschritt kann ein zweiter Schaumstoffträgerstreifen ebenfalls (insbesondere von der anderen, dem ersten Schaumstoffträgerstreifen gegenüberliegenden Seite her) an dieses doppelseitige Klebeband angebracht werden, so dass insgesamt ein Verbund aus den wenigstens zwei Schaumstoffträgerstreifen und dem dazwischenliegenden doppelseitigen Klebeband entsteht.

Bevorzugt handelt es sich bei dem Material auch um eine Kunststofffolie. Besonders bevorzugt bewirkt dieses Material in einer späteren Anwendung des Dichtbandes eine Erhöhung der Luftdichtigkeit. Es handelt sich somit bei der zwischen die Schaumstoffträgerstreifen eingebrachte Schicht um eine wasserdampfdiffusionsbehindernde Schicht. In Abhängigkeit der gewünschten Anwendung und der eingebrachten Schicht kann die Schicht auch als Dampfsperre (Sd-Wert größer 1500 m) oder Dampfbremse (Sd-Wert zwischen 0,5 und 1500 m) dienen. Bevorzugt wird dieses Material von einer Rolle abgewickelt, um an den jeweiligen Schaumstoffträgerstreifen angeordnet zu werden. Dabei kann dieses Material bevorzugt ebenfalls wenigstens zeitweise in der gleichen Transportrichtung und weiter bevorzugt mit der gleichen Transportgeschwindigkeit gefördert werden wie der Schaumstoffstreifen selbst. Nach dem Anbringen des Materials werden bevorzugt die mindestens zwei Schaumstoffklebestreifen wieder zusammengeführt bzw. der Abstand zwischen mindestens zwei Schaumstoffklebestreifen wird wieder reduziert.

Bei einem weiteren bevorzugten Verfahren handelt es sich bei der Außenoberfläche um eine durch den Schnitt erzeugte Außenoberfläche des Schaumstoffträgerstreifens.

Bei einer weiteren vorteilhaften Ausführungsform wird wenigstens einer der mindestens zwei Schaumstoffträgerstreifen wenigstens abschnittsweise in einer zu der Transportrichtung senkrechten Richtung gefördert.

Bevorzugt wird der besagte Schnitt in einer Ebene eingebracht, die sich sowohl in der Transportrichtung des Schaumstoffträgers erstreckt, als auch in einer Richtung, welche zu der Transportrichtung sowie der Breitenrichtung des Schaumstoffträgers senkrecht steht. Es wäre jedoch auch möglich, dass ein Schnitt eingebracht wird, der sich einerseits in der Transportrichtung erstreckt, andererseits jedoch in einer Richtung, welche schräg bezüglich der Ebene verläuft, welche durch die Breitenrichtung und die Transportrichtung definiert wird. Bevorzugt ist in dieser Variante, dass der Schnitt in Breitenrichtung gegenüber der durch die Breitenrichtung und die Transportrichtung aufgespannte Ebene um einen vorgegebenen Winkel geneigt ist. Durch einen derartigen schrägen Schnitt wäre es in der Folge auch möglich, ein Dichtelement und insbesondere ein Folienelement in einer im Wesentlichen horizontalen Richtung zuzuführen, welches anschließend an die durch die Schnittflächen erzeugten Oberflächen angelegt wird. Dies wird unter Bezugnahme auf die Figuren genauer erläutert.

Bei einem weiteren bevorzugten Verfahren wird der Schaumstoffträger nach Einbringen des Schnittes wenigstens abschnittsweise entlang einer gekrümmten Transportbahn gefördert. Dabei kann er in einer Richtung gefördert werden, welche sowohl eine Komponente in der ursprünglichen Transportrichtung aufweist, als auch in einer hierzu senkrechten Richtung und insbesondere in einer Richtung, die auch zu einer Breitenrichtung des Schaumstoffträgers senkrecht steht. Bevorzugt wird wenigstens ein Teil der Schaumstoffträgerstreifen entlang einer S-förmigen Bahn geführt.

Bei einem weiteren bevorzugten Verfahren wird ein Abstand zwischen mindestens zwei Schaumstoffträgerstreifen zu einem späteren Zeitpunkt verringert. Insbesondere erfolgt diese Verringerung nach Einbringen des Materials, beispielsweise des Folienelementes.

Bei einem weiteren bevorzugten Verfahren wird in den Schaumstoffträger eine Vielzahl von zueinander parallelen Schnitten eingebracht, wobei auf diese Weise eine Vielzahl von Schaumstoffträgerstreifen erzeugt wird, wobei bevorzugt die Schaumstoffträgerstreifen durch die erzeugten Schnitte vollständig voneinander getrennt werden. Bevorzugt erstrecken sich dabei alle diese genannten Schnitte in der Transportrichtung des Schaumstoffträgers. Bevorzugt wird anschließend eine erste Gruppe dieser Schaumstoffträgerstreifen in einer ersten Richtung bewegt und eine zweite Gruppe dieser Schaumstoffträgerstreifen in einer hiervon abweichenden zweiten Richtung, insbesondere einer entgegengesetzten Richtung, um so diese erste Gruppe an Schaumstoffträgerstreifen von der zweiten Gruppe an Schaumstoffträgerstreifen weiter zu beabstanden. Durch diese weitere Beabstandung wird bevorzugt die Zugänglichkeit der einzelnen erzeugten Schaumstoffträgerstreifen verbessert. Insbesondere kann in diesem voneinander entfernten Zustand leichter ein Material und insbesondere ein Folienelement auf die einzelnen so erzeugten Schaumstoffträgerstreifen bzw. einen bestimmten Anteil der Schaumstoffträgerstreifen aufgebracht werden. Bevorzugt werden in der Breitenrichtung des Schaumstoffträgers einander benachbarte Schaumstoffträgerstreifen jeweils in unterschiedliche Richtungen auseinanderbewegt.

So ist es beispielsweise möglich, dass durch eine Vielzahl von Schnitten eine Zahl n an Schaumstoffträgerstreifen erzeugt wird (1, 2, 3,.. n) und anschließend jeder zweite dieser Schaumstoffstreifen beispielsweise nach oben transportiert wird (z.B. der 1., 3., 5. und 7. Streifen) und die übrigen Streifen (der 2., 4., 6. und 8. Streifen) nach unten bewegt werden. Durch dieses Auseinanderstellen der jeweiligen Schaumstoffträgerstreifen wird auch der gegenseitige Abstand erhöht und damit auch die Einbringbarkeit von einem Folienelement erleichtert.

Bevorzugt wird daher die erste Gruppe an Schaumstoffträgerstreifen bezüglich der Transportrichtung und der Breitenrichtung nach oben transportiert bzw. senkrecht zu der besagten Ebene nach oben und die andere Gruppe an Schaumstoffträgerstreifen nach unten.

Vorteilhaft sind die Anzahlen der jeweiligen Gruppen an Schaumstoffträgerstreifen gleich groß und/oder unterscheiden sich um nicht mehr als 1 voneinander.

Bei einem weiteren bevorzugten Verfahren werden die Schaumstoffträgerstreifen wenigstens abschnittsweise ebenfalls in der Transportrichtung bewegt, allerdings in einer Ebene, welche parallel zu der ursprünglichen Transportebene verläuft.

Bei einem weiteren bevorzugten Verfahren wird eine Abfolge der Schaumstoffträgerstreifen in einer senkrecht zu der Transportrichtung stehenden Richtung geändert. Dies bedeutet, dass ursprünglich n Schnitte erzeugt werden und hierdurch n+1 Schaumstoffstreifen erzeugt werden, welche mit 1 bis n+1 nummeriert werden können. Eventuell (gleichzeitig und/oder zeitlich und/oder örtlich versetzt) vorgenommene zusätzliche Schnitte, welche in Randbereichen ausgeführt werden, um eventuelle produktionsbedingte Unebenheiten im Bereich der Seitenränder des Schaumstoffträgers durch abtrennen eines Randstreifens (Randabfall) zu entfernen, sind hierbei nicht berücksichtig. Die durch Einbringen der n Schnitte erzeugten Schaumstoffträgerstreifen 1 bis n+1 liegen nach Einbringung der Schnitte bevorzugt in einer definierten Abfolge vor (1. Streifen, 2. Streifen, 3. Streifen, 4. Streifen, ..). Bevorzugt wird diese Abfolge der einzelnen Streifen geändert, so dass beispielsweise in einem wieder zusammengeführten Zustand der Schaumstoffträgerstreifen 2 zum randständigen Schaumstoffträgerstreifen wird, auf den der Schaumstoffträgerstreifen 1 folgt, auf welchen wiederum der Schaumstoffträgerstreifen 4 folgt, an welchen sich dann Schaumstoffträgerstreifen 3 anschließt usw.. Durch diese Veränderung der Reihenfolge kann die weitere Bearbeitung der Schaumstoffstreifen erleichtert werden, indem etwa die durch die Schnitte entstandenen Oberflächen noch leichter zugänglich werden. Allgemein kann durch dieses Ändern der Reihenfolge bzw. Abfolge der Schaumstoffträgerstreifen wiederum die Zugänglichkeit der zu bearbeitenden Oberflächen erleichtert werden. Weiterhin ist es durch diese Änderung der Reihenfolge möglich, Unebenheiten, welche beim Einbringen eines Schnitts zwischen zwei zuvor benachbarten Schaumstoffträgerstreifen entstehen können, dadurch auszugleichen, dass nach dem erneuten Zusammenführen nicht die komplementär geformten Oberflächen die eingebrachte Schicht beidseitig kontaktieren. Somit können sich lokale Unebenheiten nach dem Verbinden der Schaumstoffträgerstreifen (aufgrund deren Kompressibilität) ausgleichen.

Bei einem weiteren bevorzugten Verfahren werden einzelne Streifen oder mehrere Streifen gedreht bzw. gedrillt und insbesondere um eine Richtung gedreht, welche zu der Transportrichtung der Streifen parallel verläuft.

Bevorzugt wird eine erste Gruppe der Schaumstoffträgerstreifen jeweils parallel zueinander geführt und eine zweite Gruppe von Schaumstoffträgerstreifen ebenfalls parallel zueinander geführt. Bevorzugt werden die erste Gruppe der Schaumstoffträgerstreifen und die zweite Gruppe von Schaumstoffträgerstreifen auf unterschiedlichen Ebenen geführt. Bevorzugt sind diese Ebenen parallel zu der durch Transportrichtung und Breitenrichtung aufgespannten Ebene, jedoch ist mindestens eine dieser Ebenen gegenüber letzterer Ebene entlang einer Senkrechten zur Ebene verschoben. Vorteilhaft werden somit auch in dem stärker zueinander beabstandeten Zustand sämtliche Schaumstoffträgerstreifen wenigstens abschnittsweise parallel zueinander transportiert, wenn auch gruppenweise in zueinander unterschiedlichen Ebenen.

Die vorliegende Erfindung ist weiterhin auf eine Vorrichtung zum Herstellen eines Dichtbandes gerichtet. Diese Vorrichtung weist eine Transporteinrichtung auf, welche dazu geeignet und bestimmt ist, einen Schaumstoffträger entlang einer vorgegebenen Transportrichtung und/oder entlang einer vorgegebenen Transportbahn zu transportieren. Weiterhin weist die Vorrichtung eine Vielzahl von Schneidelementen auf, welche dazu geeignet und bestimmt sind, eine Vielzahl von zueinander parallelen und sich in der Transportrichtung erstreckenden Schnitten in den Schaumstoffträger einzubringen. Dabei wird der Schaumstoffträger durch diese Schnitte in eine Vielzahl von in einer zu der Transportrichtung senkrecht stehenden Richtung vollständig voneinander getrennte Schaumstoffträgerstreifen geschnitten. Erfindungsgemäß weist die Vorrichtung eine Umlenkeinrichtung oder eine Abstandserhöhungseinrichtung auf, welche wenigstens einen ersten Schaumstoffträgerstreifen gegenüber einem zweiten Schaumstoffträgerstreifen in einer zu der Transportrichtung senkrecht stehenden Richtung bewegt, um so einen gegenseitigen Abstand dieser beiden Schaumstoffträgerstreifen und insbesondere derjenigen Oberflächen, die durch die Schnitte entstanden sind, in dieser senkrechten Richtung zu vergrößern.

Insbesondere handelt es sich hierbei - wie oben erwähnt - um eine Richtung, die senkrecht sowohl zu der Transportrichtung als auch zu einer Breitenrichtung des Schaumstoffträgers steht.

Bei einer weiteren vorteilhaften Ausführungsform weist die Vorrichtung eine Materialeinbringungseinrichtung auf, welche an wenigstens einer Oberfläche wenigstens eines Schaumstoffträgerstreifens ein Material anbringt. Vorteilhaft handelt es sich hierbei um eine Oberfläche, die durch den Schnitt entstanden ist. Diese Materialeinbringungseinrichtung kann dabei beispielsweise einen Rollenträger aufweisen, an dem das zusätzliche Material als Rolle aufgewickelt ist und von dem dieses Material abgewickelt werden kann. Vorteilhaft weist die Materialeinbringungseinrichtung ebenfalls eine Transporteinrichtung auf, welche dieses weitere Material in einer vorgegebenen Transportrichtung fördert, wobei bevorzugt diese Transportrichtung wenigstens abschnittsweise mit der Transportrichtung des Schaumstoffträgers bzw. der Schaumstoffträgerstreifen zusammenfällt.

Vorteilhaft weist die Materialeinbringungseinrichtung eine Vielzahl von Rollenträgern auf, von denen jeweils ein Folienelement abgewickelt wird. Dabei ist es möglich, dass eine erste Gruppe von derartigen Rollenträgern einer ersten Gruppe der geschnittenen Schaumstoffstreifen zugeordnet ist bzw. an diesen angeordnet wird und eine zweite Gruppe von Materialeinbringungseinrichtungen bzw. Trägerrollen einer zweiten Gruppe der Schaumstoffträgerstreifen zugeordnet ist. Falls es sich bei dem Folienelement um einen (ggf. doppelseitigen) Klebestreifen handelt, bei welchem mindestens eine Klebefläche mit einem Liner bedeckt ist, ist bevorzugt eine Einrichtung zur Entfernung des Liners vom Klebestreifen und anschließender Aufnahme des Liners vorteilhaft. Bevorzugt wird der Liner aufgewickelt und in Rollenform bis zu dessen Entfernung aus der Vorrichtung zwischengespeichert.

Bei einer weiteren vorteilhaften Ausführungsform weist die Vorrichtung eine zweite Umlenkeinrichtung auf, welche in der Transportrichtung nach der ersten Umlenkeinrichtung angeordnet ist und welche dazu geeignet und bestimmt ist, den ersten Schaumstoffträgerstreifen gegenüber dem zweiten Schaumstoffträgerstreifen in der zu der Transportrichtung senkrecht stehenden Richtung zu bewegen, um so einen Abstand dieser beiden Schaumstoffträgerstreifen bezüglich einander in dieser senkrecht stehenden Richtung wieder zu verkleinern. Dies bedeutet, dass die zweite Umlenkeinrichtung insbesondere dazu dient, um die vorher auseinandergeführten Schaumstoffträgerstreifen wieder zusammenzuführen und insbesondere in der besagten Querrichtung (oder der Breitenrichtung) wieder zusammenzuführen.

Bei einer weiteren vorteilhaften Ausführungsform weist die Vorrichtung eine Trocknungseinrichtung auf, insbesondere um einen Verbund aus den Schaumstoffträgerstreifen und dem eingebrachten weiteren Material zu trocknen bzw. auszuhärten.

Bei einer weiteren vorteilhaften Ausführungsform weist die Vorrichtung Umlenkräder und/oder Umlenkwalzen auf.

Bei einer weiteren vorteilhaften Ausführungsform weist die Vorrichtung eine Imprägniereinrichtung auf, welche besonders bevorzugt stromaufwärts bezüglich der Schneideinrichtung bzw. den Schneideinrichtungen angeordnet ist. Vorteilhaft weist die Schneideinrichtung eine Vielzahl von Schneidelementen, beispielsweise Schneidmessern auf, welche die Schnitte in dem Schaumstoffträger erzeugen. Dabei ist es auch möglich, dass die Schneidelemente Schneidscheiben aufweisen, beispielsweise Schneidmesser, welche sich um eine vorgegebene Drehachse drehen.

Bei einer weiteren vorteilhaften Ausführungsform ist eine Transporteinrichtung zum Transportieren des Schaumstoffträgers vorgesehen. Diese weist bevorzugt ein Transportband, (Transport-) Rollen und/oder (Transport-) Ketten auf. Auch ist es möglich, dass derartige Transporteinrichtungen, wie Transportrollen, vorgesehen sind, um die einzelnen geschnittenen Streifen zu transportieren. Einzelne, mehrere oder alle Transportbänder, (Transport-) Rollen und/oder (Transport-) Ketten können (separat oder gemeinsam) (z.B. über einen Motor) angetrieben sein.

Bei einer weiteren vorteilhaften Ausführungsform weist die Vorrichtung eine Abwickelvorrichtung auf, welche den ursprünglichen Schaumstoffträger bzw. das Schaumstoffmaterial von einer Rolle abwickelt.

Bei einer weiteren vorteilhaften Ausführungsform weist die Vorrichtung auch eine Aufwickeleinrichtung auf, welche die geschnittenen und mit den Dichtelementen versehenen Schaumstoffträgerstreifen wiederum auf einer weiteren Rolle (Vorratsrolle) aufwickelt. Bevorzugt werden die geschnittenen und mit den Dichtelementen versehenen Schaumstoffträgerstreifen vor dem Aufwickeln auf dieser Rolle komprimiert. Die Komprimierung erfolgt im Wesentlichen in Richtung der Senkrechten der durch Transportrichtung und Breitenrichtung aufgespannten Ebene. Somit wird eine Höhe der Schaumstoffträgerstreifen reduziert, wodurch eine Reduzierung des Durchmessers der Vorratsrolle erreicht werden kann. Verfahrensseitig wird also bevorzugt die Schaumstoffbahn mittels einer Ausgangsrolle zur Verfügung gestellt, auf der die Schaumstoffbahn aufgerollt ist. Von dieser Rolle wird die Schaumstoffbahn bevorzugt abgerollt. Bevorzugt weist - wie oben erwähnt - die Vorrichtung eine Imprägniereinrichtung auf, welche stromaufwärts bezüglich der ersten Umlenkeinrichtung angeordnet ist. Es wäre jedoch auch möglich, dass ein derartiges Imprägnieren erst nach dem Einbringen der Folienelemente erfolgt. Außerdem wäre es in einer anderen bevorzugten Ausführungsform denkbar, dass keine Imprägniereinrichtung vorgesehen ist und beispielsweise bereits eine imprägnierte Schaumstoffbahn zugeführt wird oder keine Imprägnierung gewünscht ist.

Bei einer weiteren vorteilhaften Ausführungsform weist die Vorrichtung eine weitere Schneideinrichtung auf, welche dazu geeignet und bestimmt ist, das bereits mit dem Material bzw. mit den Folienelementen versehene und aufgerollte Schaumstoffmaterial wiederum zu schneiden. Dabei kann beispielsweise ein Schneiden der Vorratsrollen mittels eines Schneidelementes erfolgen.

Bevorzugt wird das einzubringende Material (z.B. in Form eines Klebestreifens) nicht zwischen zwei durch einen Schnitt erzeugten benachbarten Schaumstoffstreifen angebracht, sondern an einer anderen Position, insbesondere nachdem eine Positionierung dieser beiden Schaumstoffträgerstreifen bezüglich einander geändert wurde. Weiterhin wäre es auch möglich, dass das einzubringende Material (z.B. Folienmaterial) durch einen Laminiervorgang eingebracht wird.

Bei einem weiteren bevorzugten Verfahren werden die geschnittenen Schaumstoffstreifen nach Einbringen des Dichtelementes wieder miteinander verbunden. Dabei kann insbesondere auch ein Schritt des Befestigens der jeweiligen Klebeverbindung zwischen den Folienelementen und den einzelnen Schaumstoffträgerstreifen erfolgen. Bei einem weiteren bevorzugten Verfahren erfolgt auch eine Wärmeaufbringung auf die mit den Elementen versehenden Schaumstoffträgerstreifen, um die Haftung zu verbessern.

Bei einem weiteren bevorzugten Verfahren werden die geschnittenen Schaumstoffträgerstreifen in wenigstens einem Verfahrensschritt insbesondere in der Breitenrichtung des Schaumstoffträgers aneinandergedrückt.

Bevorzugt weist das Schneidelement - wie oben erwähnt - ein Messer oder eine Säge auf.

Bevorzugt sind die Schneidelemente auch derart angeordnet, dass die so erzeugten Schnitte die einzelnen Schaumstoffträgerstreifen vollständig durchtrennen und insbesondere in einer zu der Transportrichtung und der Breitenrichtung senkrecht stehenden Höhenrichtung vollständig durchtrennen.

Die vorliegende Erfindung ist weiterhin auf ein Abdichtband gerichtet, welches nach einem Verfahren der oben beschriebenen Art und/oder mittels einer Maschine der oben beschriebenen Art hergestellt ist. Ein solches Abdichtband weist einen Schaumstoffträger auf, der wiederum ein flexibles Schaumstoffmaterial aufweist. Dabei erstreckt sich dieser Schaumstoffträger entlang einer Längsrichtung und bevorzugt auch entlang einer hierzu senkrechten Breitenrichtung. Weiterhin weist der Schaumstoffträger zwei voneinander durch ein Dichtelement vollständig getrennte Schaumstoffträgerabschnitte auf, wobei sich dieses Dichtelement ebenfalls in der besagten Längsrichtung des Grundträgers erstreckt. Es wird dabei darauf hingewiesen, dass es sich bei einem aufgerollten Zustand dieses Abdichtbandes bei dieser Längsrichtung auch um eine spiralförmig verlaufende Richtung handeln kann.

Das Dichtelement weist ein Trägermaterial auf, welches beidseitig mit einer Klebebeschichtung versehen ist, wobei die beiden Schaumstoffträgerabschnitte an diesem Dichtelement anhaften und wobei das Dichtelement an einer durch eine Schneideinrichtung geschnittenen Oberfläche des Schaumstoffträgers anhaftet. Vorteilhaft haftet das Dichtelement an zwei durch eine Schneideinrichtung geschnittene Oberflächen an. Insbesondere bei einem Versatz der einzelnen Schaumstoffträgerstreifen gegenüber einander ist es jedoch auch denkbar, dass das Dichtelement zumindest einseitig an einer Oberfläche anliegt, welche keine durch eine Schneideinrichtung geschnittene Oberfläche ist.

Bei einer weiteren vorteilhaften Ausführungsform ist das Dichtband als Rolle konfektioniert. Bei einer weiteren vorteilhaften Ausführungsform ist der Schaumstoff zur verzögerten Rückstellung imprägniert.

Besonders bevorzugt handelt es sich bei dem Schaumstoffträger um einen rückstellfähigen Schaumstoffträger.

Bei einer weiteren bevorzugten Ausführungsform weist ein Schaumstoffträgerabschnitt eine geringere Breite auf als ein anderer Schaumstoffträgerabschnitt.

Weitere Vorteile und Ausführungsformen ergeben sich aus den beigefügten Zeichnungen:

### Darin zeigen:

- Fig. 1a - 1c: drei Darstellungen zu einem ersten erfindungsgemäßen Verfahren;
- Fig. 2a - 2c: drei Darstellungen zu einem weiteren erfindungsgemäßen Verfahren;
- Fig. 3a - 3c: drei Darstellungen zur Veranschaulichung eines weiteren erfindungsgemäßen Verfahrens;
- Fig. 4a - 4c: drei Darstellungen zur Veranschaulichung eines weiteren erfindungsgemäßen Verfahrens;
- Fig. 5: eine Darstellung zur Veranschaulichung eines weiteren erfindungsgemäßen Verfahrens;
- Fig. 6: eine Darstellung eines weiteren erfindungsgemäßen Verfahrens;
- Fig. 7: eine Darstellung eines weiteren erfindungsgemäßen Verfahrens;
- Fig. 8a - 8c: drei Darstellungen zu einem erfindungsgemäßen Verfahren, bei dem eine horizontal liegende Folie eingebracht wird;
- Fig. 9a - 9c: drei Darstellungen eines weiteren erfindungsgemäßen Verfahrens;
- Fig. 10a, 10b: zwei Darstellungen eines weiteren erfindungsgemäßen Verfahrens;

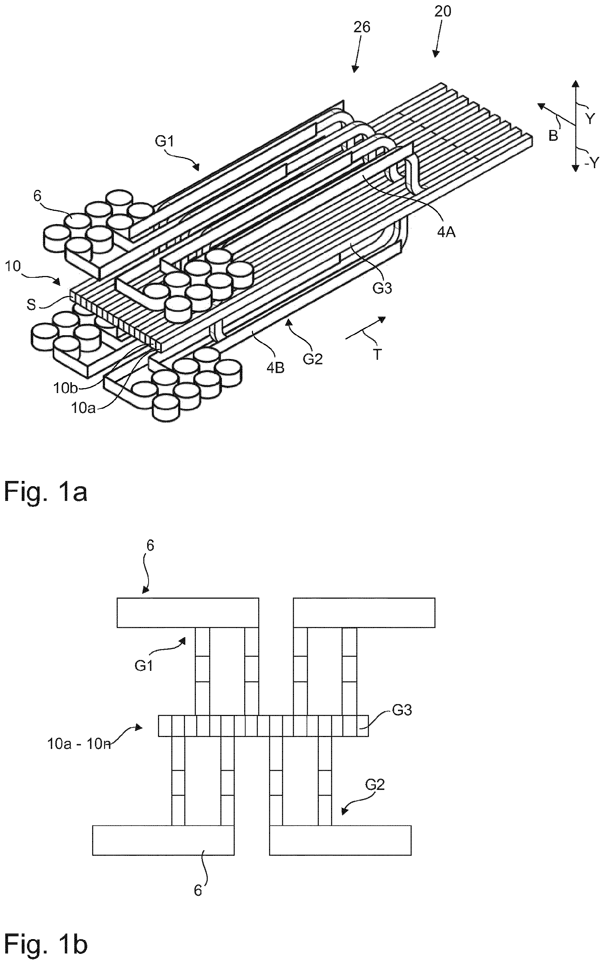

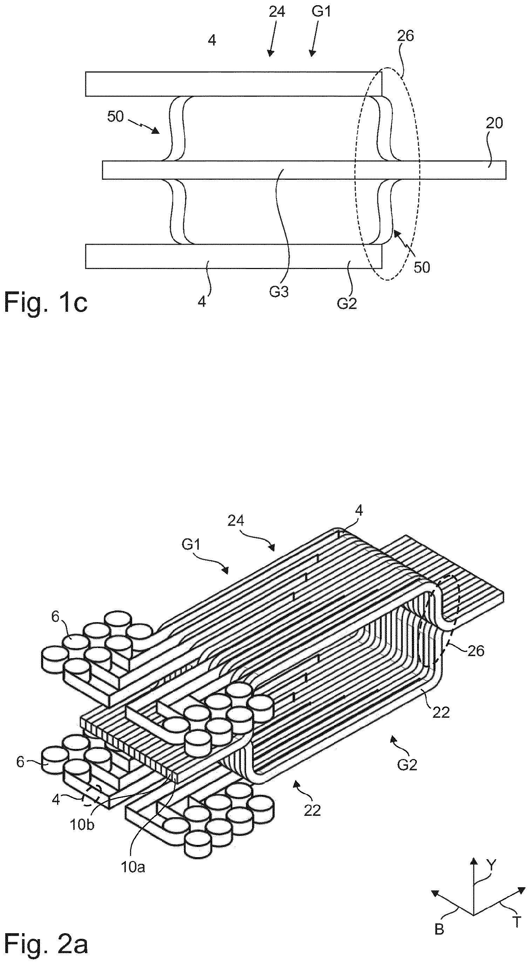

- Fig. 1 1a - 1 1c: drei Darstellungen eines weiteren erfindungsgemäßen Verfahrens;

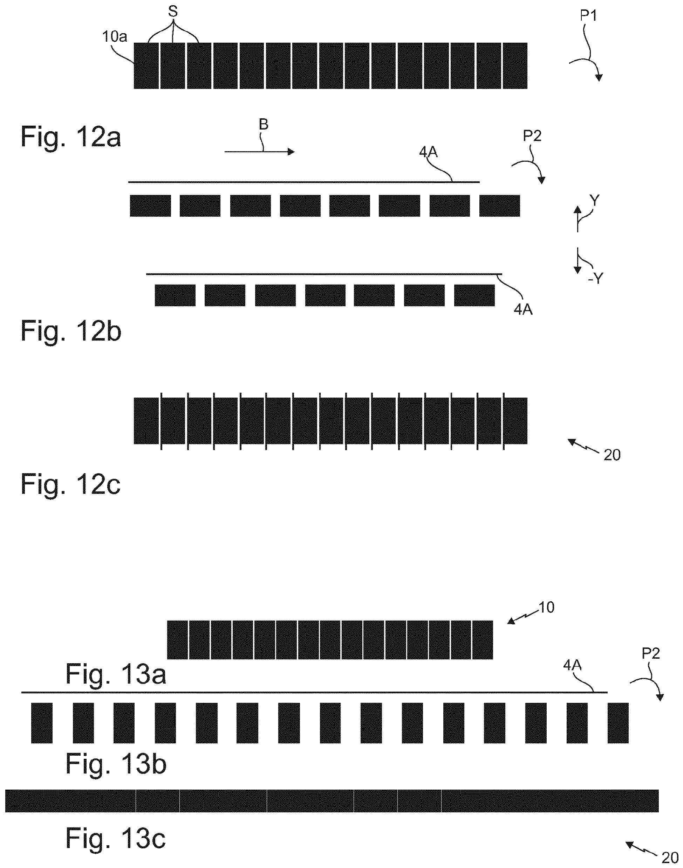

- Fig. 12a - 12c: vier Darstellungen eines weiteren erfindungsgemäßen Verfahrens;
- Fig. 13a - 13c: drei weitere Darstellungen eines erfindungsgemäßen Verfahrens.

Die Figuren 1a - 1c zeigen eine erste Ausgestaltung eines erfindungsgemäßen Verfahrens. Dabei wird zunächst ein Schaumstoffträger 10 durch eine Vielzahl von Schnitten S in eine Vielzahl von Schaumstoffträgerstreifen 10a, 10b, unterteilt. Eine erste Gruppe G1 dieser Schaumstoffstreifen wird hier gekrümmt in der Richtung Y nach oben geführt, eine zweite Gruppe G2 der Schaumstoffstreifen wird in der Richtung -Y nach unten verschoben und ein dritter Teil G3 der Schaumstoffstreifen wird weiter geradlinig entlang der Transportrichtung T transportiert. Auf jedem einzelnen Streifen der oberen Gruppe G1 und auf jedem einzelnen Streifen der unteren Gruppe G2 werden seitlich Klebefolien 4A angeordnet. Diese Klebefolien werden von Rollen 6 abgerollt. In diesem Zustand werden die drei Gruppen G1 - G3 in einem Übergangsbereich 26 wieder zusammengeführt und ergeben so im Ergebnis eine Dichtbahn 20, bei der jeweils Folien (als wasserdampfdiffusionsbehindernde Schicht und/oder ein Dichtmittel) zwischen den einzelnen Streifen angeordnet sind. Aus einer solchen Dichtbahn 20 lassen sich Dichtbänder schneiden, welche jeweils zwischen zwei Schaumstoffträgerstreifen eine wasserdampfdiffusionsbehindernde Schicht und/oder ein Dichtmittel aufweisen.

Figur 1b zeigt eine Seitendarstellung dieses Vorgangs. Man erkennt hier insbesondere wieder die Träger 6, von denen die Klebefolie abgerollt wird, sowie die drei Gruppen G1 - G3 der einzelnen Schaumstoffträgerstreifen. Figur 1c zeigt eine Ansicht von der Seite, wobei man auch hier erkennt, dass in einem Bereich 24 die drei Gruppen G1, G2 und G3 an Schaumstoffträgerstreifen einerseits geradlinig und zweitens parallel zueinander gefördert werden. Außerdem ist in Fig. 1c zu erkennen, dass die Schaumstoffträgerstreifen abschnittsweise derart abgelenkt werden, dass sie einem S-förmigem Verlauf 50 (oder einem entsprechenden Spiegelbild davon) folgen.

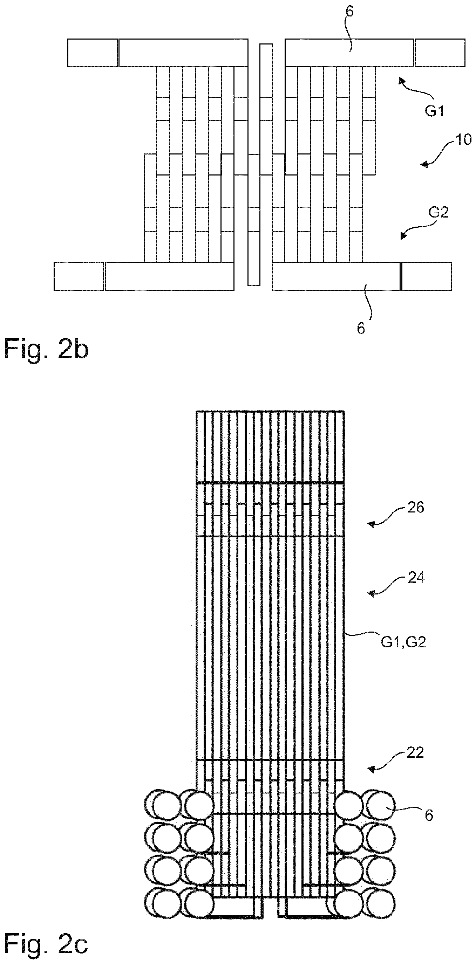

Die Figuren 2a - 2c zeigen eine weitere Ausgestaltung des erfindungsgemäßen Verfahrens. Bei diesem Verfahren werden die einzelnen Schaumstoffträgerstreifen 10a, 10b, ... nicht in drei Gruppen von Schaumstoffträgerstreifen unterteilt, sondern lediglich in zwei Gruppen, wobei eine obere Gruppe G1 in der Richtung Y nach oben gehoben wird und eine Gruppe G2 in der Richtung -Y nach unten gesenkt wird. Dieses Auseinanderbewegen der Schaumstoffträgerstreifen erfolgt bevorzugt in einem Übergangsbereich 22. In einem weiteren Übergangsbereich 26 werden die Schaumstoffträgerstreifen wieder zusammengeführt. In dem mittleren Bereich 24 werden die einzelnen Klebestreifen 4 wiederum - wie in Figur 1a gezeigt - seitlich auf die Schaumstoffstreifen aufgebracht. Die erste Gruppe an Schaumstoffstreifen G1 wird hier um den gleichen Betrag nach oben gehoben wie die zweite Gruppe G2 der Schaumstoffträgerstreifen nach unten gesenkt wird. Auf diese Weise kann erreicht werden, dass es bei dem Zusammenführen der einzelnen Schaustoffträgerstreifen nicht zu einem ungewünschten Versatz kommt.

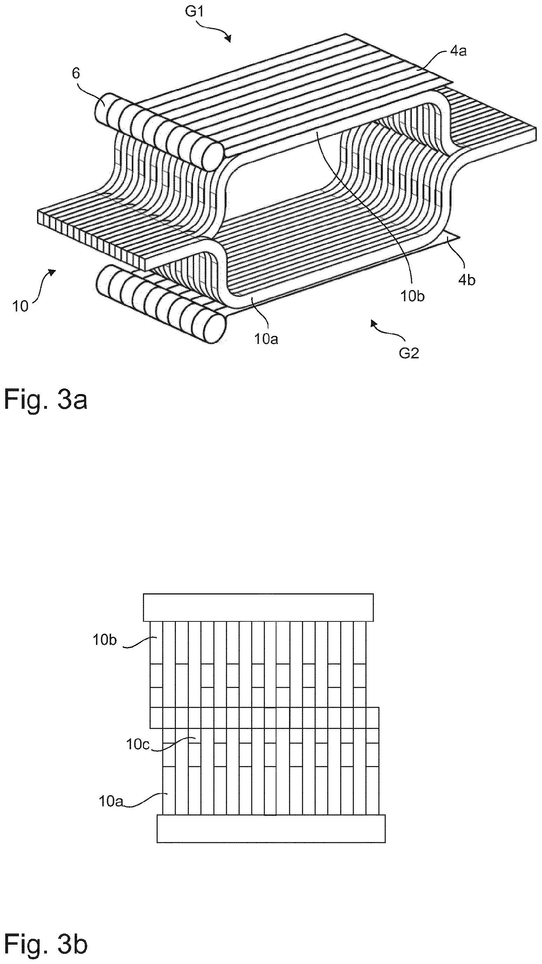

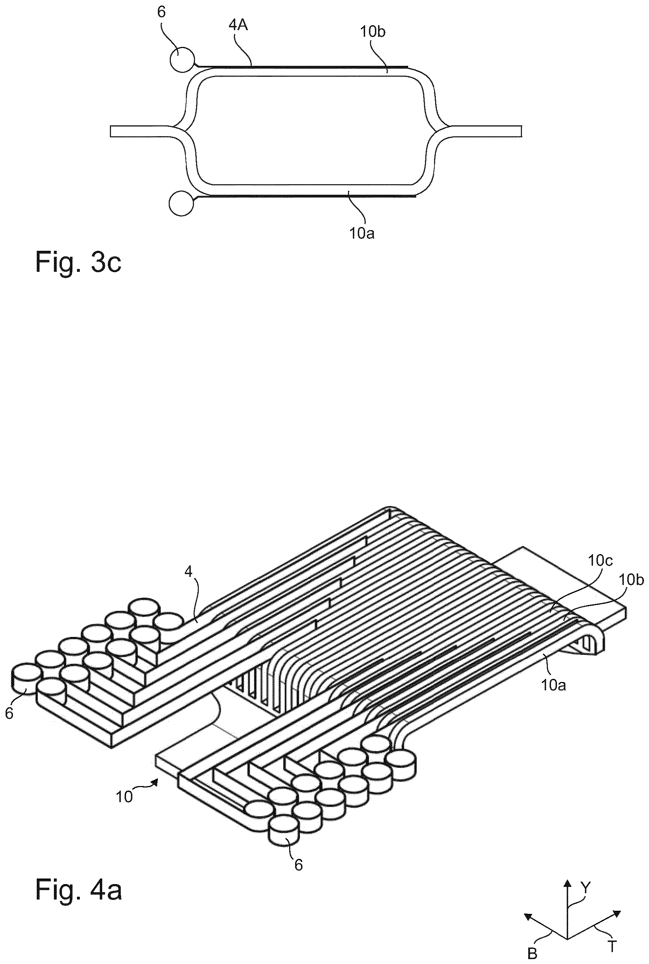

Die Figuren 3a - 3c zeigen eine weitere Darstellung eines erfindungsgemäßen Verfahrens. Auch bei diesem Verfahren werden die einzelnen Gruppen an Schaumstoffstreifen in der in Figur 2a - 2c gezeigten Weise voneinander getrennt. Allerdings werden hier in Abweichung an die jeweiligen Ober- bzw. Unterseiten der Schaumstoffträgerstreifen die Klebestreifen angeklebt. Anders als in den Figuren 3a - 3c gezeigt, werden die Schaumstoffträgerstreifen hier noch mindestens einmal, nämlich nach dem Aufbringen der Klebestreifen zusätzlich jeweils um 90° gedreht, damit die einzelnen Schaumstoffträgerstreifen so ausgerichtet sind, dass sie über einen jeweils zwischen ihnen angeordneten Klebestreifen aneinander befestigt werden können. Insbesondere bei von einem quadratischen Querschnitt abweichenden Querschnitten der Schaumstoffträgerstreifen ist ggf. eine weitere Drehung der Schaumstoffträgerstreifen um 90° vor dem Aufbringen der Klebestreifen notwendig oder vorteilhaft.

Diese Ausgestaltung bietet den Vorteil, dass die Klebestreifen in relativ bequemer Weise, nämlich an den oberen Flächen der jeweiligen Schaumstoffstreifen, angeordnet werden können. Bevorzugt werden auch hier - wie in den Figuren 3a und 3b gezeigt - die Klebebänder einzeln zugeführt, d.h. es wird jedem Schaumstoffstreifen genau ein Klebebandstreifen zugeordnet.

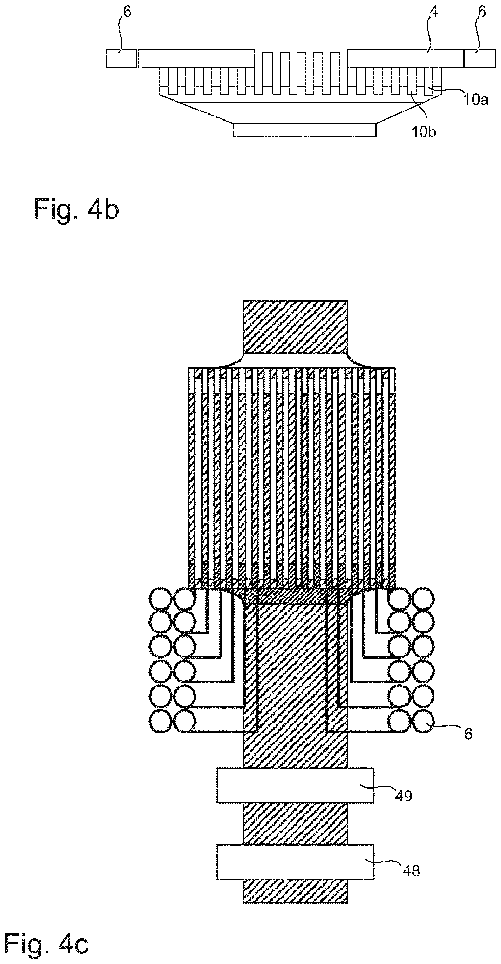

Die Figuren 4a - 4c zeigen eine weitere Ausgestaltung eines erfindungsgemäßen Verfahrens. Bei diesem Verfahren werden die einzelnen Schaumstoffträgerstreifen nicht in der Richtung Y voneinander getrennt bzw. beabstandet, sondern in der Breitenrichtung B. Auch auf diese Weise ist es leichter möglich, Klebestreifen 4 in die einzelnen Spalte zwischen den Schaumstoffträgerstreifen anzubringen. Bei den in den Figuren 4a - 4c gezeigten Verfahren wäre es möglich, in alle Zwischenräume zwischen den Schaumstoffträgerstreifen jeweils Klebestreifen anzubringen. Es wäre jedoch auch möglich, in einzelnen Zwischenräumen keine Klebestreifen anzubringen, um auf diese Weise insgesamt die Beabstandung der einzelnen Schaumstoffträgerstreifen zu vereinfachen.

In Fig. 4c sind zusätzlich auch eine Imprägniereinrichtung 49 und eine Trocknungseinrichtung 48 dargestellt. Das Imprägnieren und Trocknen - sofern vorgesehen - erfolgt bevorzugt vor dem Schneiden des Schaumstoffträgers in einzelne Schaumstoffträgerstreifen. Es kann jedoch auch örtlich und/oder zeitlich versetzt z.B. auf einer separaten Anlage erfolgen. Beispielsweise kann einer Anlage, auf der das in Fig. 4a - 4c dargestellte Verfahren durchgeführt werden soll, bereits ein imprägnierter und getrockneter Schaumstoffträger zugeführt werden.

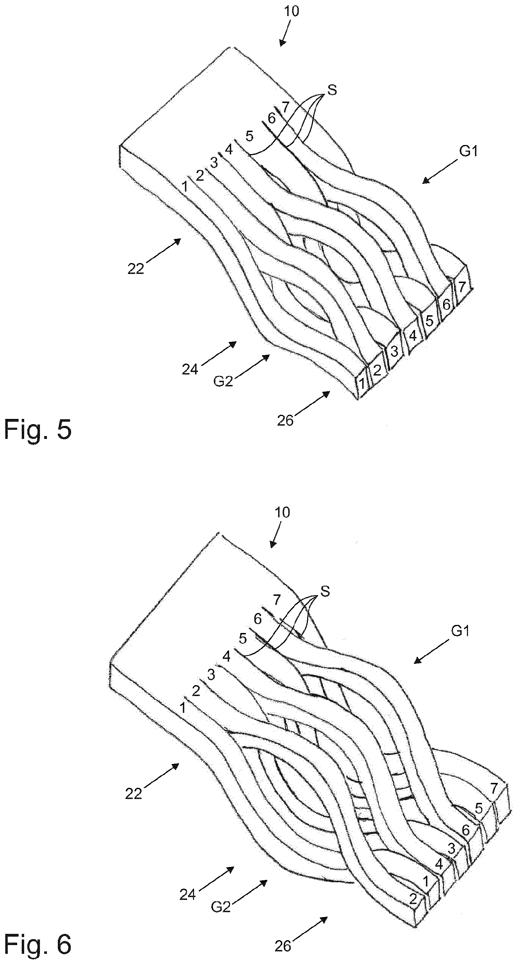

Figur 5 zeigt eine vereinfachte Darstellung eines erfindungsgemäßen Verfahrens. Hier sind wieder die drei Bereiche 22, 24 und 26 gezeigt, wobei in dem Bereich 22 die einzelnen Schaumstoffträgerstreifen voneinander beabstandet werden, in dem Bereich 24 die Schaumstoffträgerstreifen voneinander beabstandet sind und in dem Bereich 26 die Schaumstoffträgerstreifen wieder zusammengeführt werden. Bevorzugt wird in dem Bereich 24 auch der seitliche Klebestreifen aufgebracht.

Bei der in Figur 5 gezeigten Ausgestaltung werden die einzelnen Schaumstoffstreifen in der gleichen Weise bzw. der gleichen Abfolge wieder zusammengeführt, in der sie auch getrennt wurden.

Bei der in Figur 6 gezeigten Ausgestaltung werden die Positionierungen einzelner Schaumstoffträgerstreifen vertauscht. So ändert sich die Abfolge von 1, 2, 3, 4, 5, 6, 7 auf 2, 1, 4, 3, 6, 5, 7. Auf diese Weise sind einzelne Seitenflächen der Schaumstoffträgerstreifen leichter zugänglich. Außerdem können eventuell beim Schneiden auftretende Unebenheiten entlang der Schnittfläche dadurch ausgeglichen werden, dass nicht komplementäre Oberflächen zusammengefügt werden.

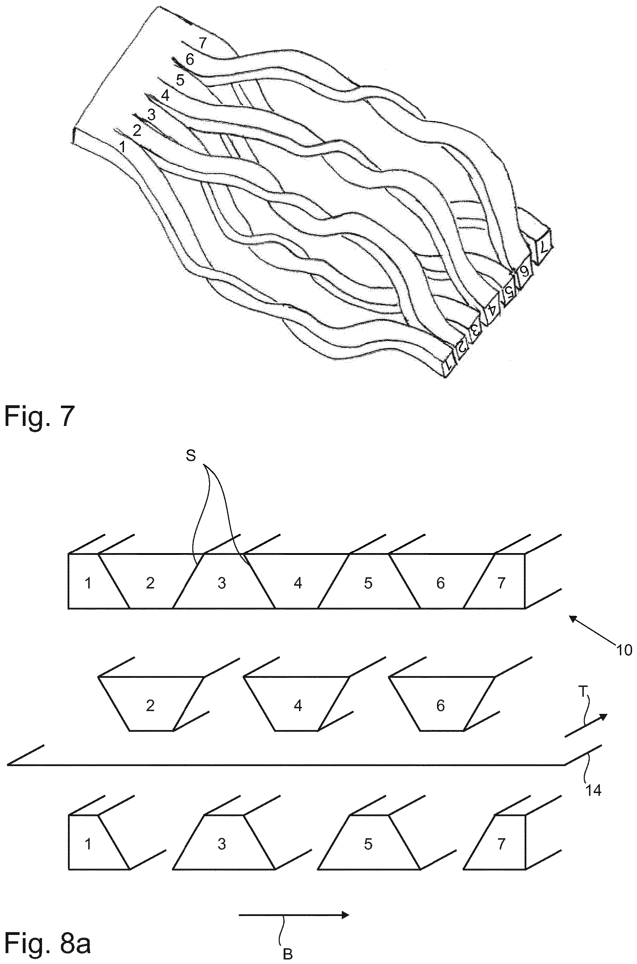

Bei der in Figur 7 gezeigten Ausgestaltung werden die Schaumstoffträgerstreifen nicht nur weiter voneinander beabstandet, sondern auch jeweils um 180° (bzw. zweimal, bevorzugt gleichsinnig, um 90°) gedreht. Auch durch diese Vorgehensweise ist es leichter möglich, ein Klebeband an den Seitenflächen anzubringen. Insbesondere wäre denkbar, ein Klebeband nach einer 90°-Drehung - also von oben oder unten - aufzubringen (wie z.B. in Fig 3a - c dargestellt), sodass der Auftrag aus einer Richtung erfolgen kann, in der keine weiteren Schaumstoffträgerstreifen den Zugang erschweren.

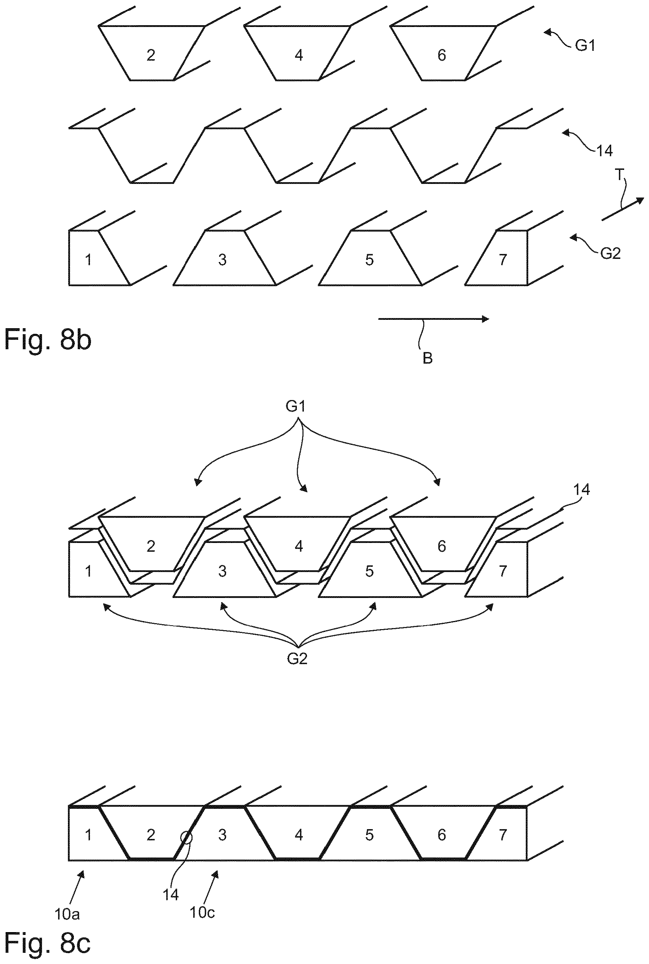

Die Figuren 8a - 8c zeigen eine weitere Ausgestaltung des erfindungsgemäßen Verfahrens. Auch hier werden zunächst Schnitte in dem Schaumstoffträger 10 angeordnet, wobei diese Schnitte jedoch bezüglich der durch die Transportrichtung T und die Breitenrichtung B aufgespannten Ebene nicht senkrecht verlaufen, sondern in Breitenrichtung gegenüber dieser Ebene um einen vorgegebenen Winkel geneigt sind. Der jeweilige Winkel kann auch eine Funktion der Eindringtiefe darstellen, so dass nicht gradlinig verlaufende Schnitte ausgebildet werden. Alle derartigen Schnitte, die nicht über ihre gesamte Schnitttiefe senkrecht bezüglich der durch die Transportrichtung T und die Breitenrichtung B aufgespannten Ebene verlaufen, werden im Folgenden auch als "schräge Anordnung" der einzelnen Schnitte bezeichnet. Eine solche Anordnung ist beispielsweise auch erforderlich, um in der in den Figuren 8a - 8c gezeigten Weise ein Klebeband 14 horizontal einzubringen. Wie insbesondere in Figur 8c gezeigt wird, werden die Schaumstoffträgerstreifen wieder zusammengeführt und z.B. ein durchgängiges doppelseitiges Klebeband fügt sich zwischen die einzelnen Seitenwandträgerstreifen ein. Damit unterscheidet sich das in den Figuren 8a - 8c gezeigte Verfahren von den oben beschriebenen Verfahren dadurch, dass einerseits nicht Klebestreifen eingeführt werden, sondern ein vollständiger Träger und dieser auch in horizontaler Richtung zwischen die einzelnen voneinander getrennten Schaumstoffträgerstreifen eingeführt wird. Die grundlegende Gemeinsamkeit mit den oben beschriebenen Verfahren besteht darin, dass gleichwohl durchgängige Schnitte in den Schaumstoffträger 10 eingeführt werden und ein bestimmter Anteil der Schaumstoffträgerstreifen von einem anderen Anteil der Schaumstoffträgerstreifen beabstandet wird.

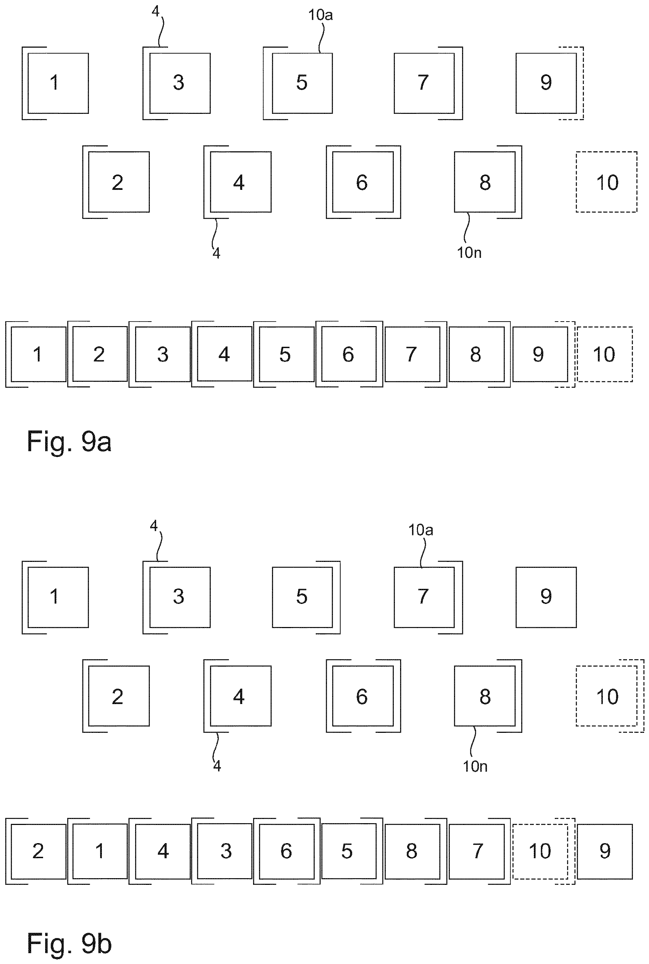

In den Figuren 9a - 9c ist ein weiteres Herstellungsverfahren gezeigt. Auch hier wird der Schaumstoffträger wieder in eine Vielzahl von Streifen 1 - 10 geschnitten. Diese werden auch wieder voneinander beabstandet. Allerdings wird nunmehr in einzelne Zwischenräume zwischen den Schaumstoffträgerstreifen kein Klebestreifen aufgebracht (im Beispiel zwischen Schaumstoffträgerstreifen mit den Nr. 5 und 7), und ein Schaumstoffträgerstreifen (in diesem Beispiel der Schaumstoffträgerstreifen mit der Nr. 6) zweiseitig mit einem doppelseitigen Klebeband beaufschlagt. Dies ermöglicht, dass für alle Schaumstoffträgerstreifen das Aufbringen der Klebestreifen aus einer Richtung erfolgen kann, in der nur eine möglichst geringe Anzahl weiterer Schaumstoffträgerstreifen angeordnet ist. Der apparative Aufwand kann so gering gehalten werden.

Bei der in Figur 9b gezeigten Ausgestaltung wird ebenfalls in den Zwischenraum zwischen den Schaumstoffträgerstreifen 3 und 5 kein Material eingebracht und der Schaumstoffträgerstreifen mit der Nr. 6 zweiseitig mit einem doppelseitigen Klebeband beaufschlagt. Zusätzlich wird noch die Positionierung zwischen den Schaumstoffträgerstreifen vertauscht, was insbesondere an den Schaumstoffträgerstreifen 9 und 10 verdeutlicht ist.

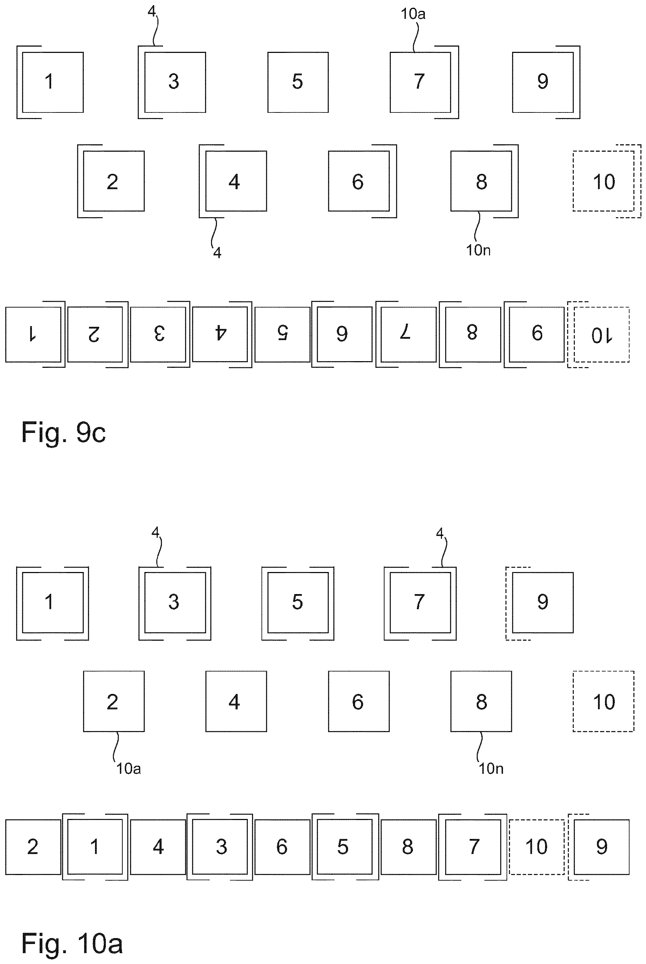

Bei der in Figur 9c gezeigten Ausgestaltung werden in die Zwischenräume zwischen die Schaumstoffträgerstreifen Nr. 3 und Nr. 5 bzw. Nr. 5 und Nr. 7 sowie auch Nr. 4 und Nr. 6 keine Folienelemente eingebracht, so dass hier auch nach der Zusammenführung kein Klebestreifen vorhanden ist. Um dennoch eine Verklebung aller Schaumstoffträgerstreifen zu ermöglichen erfolgt eine Drehung jedes einzelnen Schaumstoffträgerstreifens um 180° um dessen Transportrichtung. Wie aus dieser Darstellung ersichtlich ist, kann somit vermieden werden, dass die am weitesten innenliegenden Schaumstoffträgerstreifen, welche apparativ am schwersten zugänglich sind, mit einem Folienelement beaufschlagt werden müssen. Dennoch wird bei dieser Ausführungsform die Verklebung aller Schaumstoffträgerstreifen gewährleistet.

In den Figuren 10a - 10b ist ein weiteres Herstellungsverfahren gezeigt. Dabei ist vorgesehen, dass nur in Zwischenräume zwischen den Schaumstoffträgerstreifen auf einer Ebene Klebestreifen eingebracht werden, wohingegen in Zwischenräume zwischen den Schaumstoffträgerstreifen auf der anderen Ebene keine Klebestreifen eingebracht werden. Diese Variante kann beispielsweise vorteilhaft sein, wenn eine Ebene nicht oder nur äußerst schwer zugänglich ist. Insbesondere kann es bei dieser Ausführungsform möglichsein, eine Anlage zur Durchführung des Verfahrens in geringer Höhe auszugestalten. Außerdem wäre es denkbar, auch die Zuführung der Klebestreifen dadurch zu vereinfachen, dass ein Verbund aus zwei Klebestreifen in diejenigen Zwischenräume eingeführt wird, in denen zwei Klebestreifen benötigt werden. Dadurch könnte der apparative Aufwand für die Zuführeinrichtung vermindert und - je nach Anzahl der Schaumstoffträgerstreifen - um bis zu 50% reduziert werden. Bei dieser Variante würde jeder Verbund aus zwei Klebestreifen erst nach dem Einbringen in den jeweiligen Zwischenraum getrennt und durch die Aufbringeinrichtung jeweils ein Klebestreifen einseitig auf den jeweiligen Schaumstoffträgerstreifen aufgebracht.

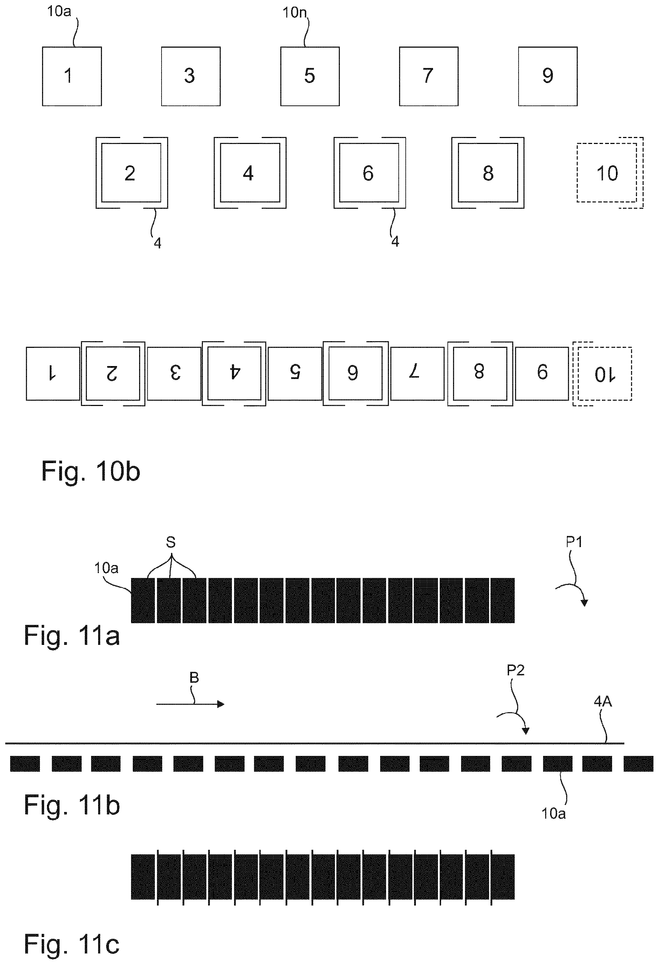

Ein Versatz (wie in Fig. 10a dargestellt) oder eine Verdrehung einzelner oder mehrerer Schaumstoffträgerstreifen (wie in Fig. 10b dargestellt) wäre optional möglich, ist jedoch nicht zwingend vorgesehen.

Die Figuren 11a - 11c zeigen eine weitere mögliche erfindungsgemäße Vorgehensweise. Hier werden wiederum die einzelnen Schaumstoffträgerstreifen in der Breitenrichtung B weiter voneinander beabstandet, um anschließend auch z.B. entlang des Pfeils P₁ um 90° gedreht werden zu können. In diesem Zustand wird an eine Oberseite der nunmehr gekippten Schaumstoffträgerstreifen eine doppelseitige Klebefolie 14 aufgebracht. Anschließend werden nach einem Schneiden dieser Folie wiederum die einzelnen Schaumstoffträgerstreifen z.B. entlang des Pfeils P₂ um 90° geschwenkt und schließlich wieder zusammengeführt, so dass - wie in Figur 11c gezeigt - auch hier wieder ein Schaumstoffträger mit darin einliegenden Klebebändern entsteht. Die zweite Drehung um 90° entlang des Pfeils P₂, welche nach dem Aufbringen des weiteren Materials (in diesem Fall der Klebefolie) erfolgt, kann bezüglich der ersten Drehung um 90°, welche vor dem Aufbringen des weiteren Materials erfolgt, den gleichen oder den entgegengesetzten Drehsinn haben. Ist kein endständiger Klebestreifen erwünscht, kann - wie in Figur 11b gezeigt der endständiger Schaumstoffträgerstreifen von der Beaufschlagung mit der Klebefolie 14 ausgeschlossen sein.

Auch bei der in den Figuren 12a - 12c gezeigten Situation werden die einzelnen Streifen wie auch bei der in den Fig. 11a - 11c dargestellten Ausführungsform seitlich, d.h. in der Richtung B voneinander beabstandet und wiederum eine Folie 14 eingebracht. Um jedoch die Anlage nicht übermäßig breit ausführen zu müssen, werden die Schaumstoffträgerstreifen zusätzlich in Gruppen zusammengefasst, welche auf verschiedenen Ebenen geführt werden. Dazu werden die Schaumstoffträgerstreifen der einzelnen Gruppen in Richtung y oder -y verschoben. Durch die unterschiedlichen Ebenen kann einerseits ein ausreichend breiter Zwischenraum und andererseits auch die kompakte Bauweise in Breitenrichtung realisiert werden. Das Aufbringen des weiteren Materials (z.B. einer Folie) kann wie in Fig. 12b dargestellt von Seiten aus erfolgen, in denen viel Platz für zusätzliche Aggregate (bzw. Anlagenteile) ist. Wie in Fig. 12b gezeigt kann beispielsweise eine obere Gruppe von Schaumstoffträgerstreifen von oben mit dem weiteren Material beaufschlagt werden, wohingegen eine untere Gruppe der Schaumstoffträgerstreifen von unten mit dem weiteren Material beaufschlagt wird. Die Drehung der Schaumstoffträgerstreifen entlang der Pfeile P₁ und P₂ um 90° erfolgt im Wesentlichen wie auch in Bezug zu Fig. 11a-c beschrieben. Die Drehung entlang der Pfeile P₁ und P₂ kann dabei unabhängig voneinander im Uhrzeigersinn oder gegen den Uhrzeigersinn erfolgen.

Sowohl bei dem in Fig. 11a - 11c dargestellten als auch bei der in Fig. 12a - 12c gezeigten Variante weist die Ausgangsbahn (Schaumstoffträger 10) im Wesentlichen dieselbe Breite auf, wie die Produktbahn (Dichtbahn 20). Die Breite wird lediglich geringfügig durch das eingebrachte zusätzliche Material beeinflusst.

Im Gegensatz dazu findet bei der in den Figuren 13a - 13c dargestellten Variante eine deutliche Veränderung der Breite zwischen dem Ausgangsmaterial (Schaumstoffträger 10) und dem Produkt (Dichtbahn 20) statt. Im Gegensatz zu den in den Figuren 11a - c und 12a - c gezeigten Schaumstoffträgerstreifen unterscheiden sich die in Figuren 13a - c dargestellten Schaumstoffträgerstreifen deutlich in ihrem Höhe-zu-Breite-Verhältnis. Insbesondere bei stark von einem quadratischen Querschnitt abweichenden Querschnitten der einzelnen Schaumstoffträgerstreifen verändert sich somit die Breite zwischen Schaumstoffträger 10 (Ausgangsmaterial) und der Dichtbahn 20 (dem Produkt) stark. Um bei Schaumstoffträgerstreifen mit einem deutlich von 1 abweichenden Verhältnis eine unnötige Verbreiterung der Anlage zu vermeiden erfolgt bei der in den Figuren 13a - 13c gezeigten Variante das Aufbringen des weiteren Materials in einem Zustand, in dem die Schaumstoffträgerstreifen eine möglichst geringe Breite aufweisen. Im gezeigten Beispiel somit vor einer Drehung (entlang Pfeil P2) um 90°. Somit kann die Anlagenbreite im Bereich des Einbringens des weiteren Materials (z.B. einer Folie) gering gehalten werden. Die Gesamtbreite des Produkts im Wesentlichen durch die Summe der Höhen der einzelnen Schaumstoffträgerstreifen bestimmt. Diese Gesamtbreite wird jedoch durch diese Verfahrensführung erst zu einem sehr späten Produktionsschritt erreicht, so dass über weite Teile der Anlage eine vergleichsweise geringe Breite realisiert werden kann. In den Figuren 13a - 13c ist dieser Effekt für besonders schmale aber hohe Streifen dargestellt. Wie auch bei den in den Fig. 11a - 11c und 12a - 12c dargestellten Verfahren werden die mit dem zusätzlichen Material (z.B. einer Klebefolie) versehenen Schaumstoffträgerstreifen anschließend zu einer Dichtbahn 20 zusammengesetzt und können anschließend zu einer Dichtbahnrolle aufgerollt werden, aus der wiederum einzelne Dichtbandrollen (z.B. durch Abstechen) gebildet werden können.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- B: Breitenrichtung
- G1: erster Anteil (der Schaumstoffstreifen)/Gruppe
- G2: zweite Gruppe (der Schaumstoffstreifen)/Gruppe
- G3: dritter Teil (der Schaumstoffstreifen)/Gruppe
- P₁: Pfeil
- P₂: Pfeil
- S: Schnitt
- T: Transportrichtung
- Y: Richtung
- -Y: Richtung
- 4: Klebestreifen/Dichtelement
- 4A: Klebefolie
- 6: Rolle
- 10: Schaumstoffträger
- 10a-n: Schaumstoffträgerstreifen
- 20: Dichtbahn
- 22: Übergangsbereich/Bereich
- 24: (mittlerer) Bereich/Bereich
- 26: Übergangsbereich/Bereich
- 42: Klebebeschichtung
- 44: Klebebeschichtung
- 46: Trägermaterial
- 48: Imprägniereinrichtung
- 49: Trocknungseinrichtung
- 50: "S"-förmiger Abschnitt

## Patentansprüche

1. Verfahren zum Herstellen eines Dichtbandes, wobei ein Schaumstoffträger (10) in einer vorgegebenen Transportrichtung (T) transportiert wird und in diesen Schaumstoffträger mindestens ein Schnitt eingebracht wird, der sich in dieser Transportrichtung erstreckt und durch diesen Schnitt wenigstens zwei voneinander vollständig getrennte Schaumstoffträgerstreifen (10a, 10b) mit wenigstens einer Außenoberfläche erzeugt werden, wobei ein Abstand zwischen diesem ersten Schaumstoffträgerstreifen (10a) und dem zweiten Schaumstoffträgerstreifen (10b) erhöht wird, in dem wenigstens einer dieser beiden Schaumstoffträgerstreifen wenigstens zeitweise in einer anderen Richtung transportiert wird als der andere Schaumstoffträgerstreifen (10b) **dadurch gekennzeichnet, dass**
ein Abstand der mindestens zwei Schaumstoffträgerstreifen in einer Richtung erhöht wird, welche senkrecht zu einer Ebene steht, welche durch die Transportrichtung einerseits und die Breitenrichtung andererseits gebildet wird,
an wenigstens einer Außenoberfläche wenigstens eines der beiden Schaumstoffträgerstreifens (10a, 10b) ein Material angebracht wird und
die Schaumstoffträgerstreifen nachdem sie voneinander entfernt wurden, wieder zusammengeführt werden.

2. Verfahren nach Anspruch 1,
**dadurch gekennzeichnet, dass**
das Material aus einer Gruppe von Materialien ausgewählt ist, welche Folienstreifen,
Klebebandstreifen oder klebstoffartige flüssige Medien enthält.

3. Verfahren nach wenigstens einem der vorangegangenen Ansprüche,
**dadurch gekennzeichnet, dass**
es sich bei der Außenoberfläche um eine durch den Schnitt erzeugte Außenoberfläche des Schaumstoffträgerstreifens handelt.

4. Verfahren nach wenigstens einem der vorangegangenen Ansprüche,
**dadurch gekennzeichnet, dass**
wenigstens einer der beiden Schaumstoffträgerstreifen (10a) in einer zu der Transportrichtung senkrechten Richtung (Y) gefördert wird.

5. Verfahren nach wenigstens einem der vorangegangenen Ansprüche,
**dadurch gekennzeichnet, dass**
ein Abstand zwischen den beiden Schaumstoffträgerstreifen zu einem späteren Zeitpunkt wieder verringert wird.

6. Verfahren nach wenigstens einem der vorangegangenen Ansprüche,
**dadurch gekennzeichnet, dass**
in den Schaumstoffträger eine Vielzahl von zueinander parallelen Schnitten eingebracht wird und auf diese Weise eine Vielzahl von Schaumstoffträgerstreifen (10a, 10b, 10c..) erzeugt wird.

7. Verfahren nach wenigstens einem der vorangegangenen Ansprüche,
**dadurch gekennzeichnet, dass**
ein erster Anteil dieser Vielzahl an Schaumstoffträgerstreifen von einem zweiten Anteil dieser Vielzahl an Schaumstoffträgerstreifen entfernt wird.

8. Verfahren nach wenigstens einem der vorangegangenen Ansprüche,
**dadurch gekennzeichnet, dass**
eine Abfolge der Schaumstoffträgerstreifen (10a, 10b, 10c..) in einer senkrecht zu der Transportrichtung stehenden Richtung geändert wird.

9. Vorrichtung (1) zum Herstellen eines Dichtbandes mit einer Transporteinrichtung, welche dazu geeignet und bestimmt ist, einen Schaumstoffträger entlang einer vorgegebenen Transportrichtung (T) zu transportieren, mit einer Vielzahl von Schneidelementen, welche dazu geeignet und bestimmt sind, eine Vielzahl von sich in der Transportrichtung (T) erstreckenden Schnitten in den Schaumstoffträger einzubringen, wobei der Schaumstoffträger durch diese Schnitte in eine Vielzahl von in einer zu der Transportrichtung senkrecht stehenden Richtung vollständig voneinander getrennte Schaumstoffträgerstreifen geschnitten wird, wobei die Vorrichtung eine erste Umlenkeinrichtung aufweist, welche wenigstens einen ersten Schaumstoffträgerstreifen (10a) gegenüber einem zweiten Schaumstoffträgerstreifen (10b) in einer zu der Transportrichtung senkrecht stehenden Richtung bewegt, um so einen Abstand dieser beiden Schaumstoffträgerstreifen (10a, 10b) in dieser senkrecht stehenden Richtung zu vergrößern, wobei diese Richtung senkrecht zu einer Ebene steht, welche durch die Transportrichtung einerseits und die Breitenrichtung andererseits gebildet wird,
**dadurch gekennzeichnet, dass**
die Vorrichtung eine Materialeinbringungseinrichtung aufweist, welche an wenigstens eine Oberfläche wenigstens eines Schaumstoffträgerstreifens wenigstens ein Material anbringt und die Vorrichtung eine zweite Umlenkeinrichtung aufweist, welche in der Transportrichtung nach der ersten Umlenkeinrichtung angeordnet ist und welche dazu geeignet und bestimmt ist, den ersten Schaumstoffträgerstreifen (10a) gegenüber dem zweiten Schaumstoffträgerstreifen (10b) in der zu der Transportrichtung senkrecht stehenden Richtung zu bewegen, um so einen Abstand dieser beiden Schaumstoffträgerstreifen (10a, 10b) in dieser senkrecht stehenden Richtung wieder zu verkleinern.

## Claims

1. Method for producing a sealing strip, wherein a foam carrier (10) is transported in a predetermined transport direction (T) and at least one cut is made in this foam carrier, which cut extends in this transport direction, and at least two foam carrier strips (10a, 10b) which are completely separated from one another and have at least one outer surface are produced by this cut, wherein a spacing between this first foam carrier strip (10a) and the second foam carrier strip (10b) being increased in which at least one of said two foam carrier strips is at least temporarily transported in a different direction than the other foam carrier strip (10b), **characterized in that**
a distance between said at least two foam carrier strips is increased in a direction perpendicular to a plane formed by said transport direction on the one hand and said width direction on the other hand,
a material is applied to at least one outer surface of at least one of said two foam carrier strips (10a, 10b), and
said foam carrier strips, after being removed from each other, are rejoined.

2. The method according to claim 1,
**characterized in that**
the material is selected from a group of materials comprising film strips, adhesive tape strips or adhesive-like liquid media.

3. The method according to at least one of the preceding claims,
**characterized in that**
the outer surface is an outer surface of the foam carrier strip produced by the cut.

4. The method according to at least one of the preceding claims,
**characterized in that**
at least one of the two foam carrier strips (10a) is conveyed in a direction (Y) perpendicular to the transport direction.

5. The method according to at least one of the preceding claims,
**characterized in that**
a distance between the two foam carrier strips is reduced again at a later time.

6. The method according to at least one of the preceding claims,
**characterized in that**
a plurality of cuts parallel to one another are made in the foam carrier and in this way a plurality of foam carrier strips (10a, 10b, 10c..) is produced.

7. The method according to at least one of the preceding claims,
**characterized in that**
a first portion of said plurality of foam carrier strips is removed from a second portion of said plurality of foam carrier strips.

8. The method according to at least one of the preceding claims,
**characterized in that**
a sequence of the foam carrier strips (10a, 10b, 10c..) is changed in a direction perpendicular to the transport direction.

9. Apparatus (1) for producing a sealing strip, having a transport device which is suitable and intended for transporting a foam carrier along a predetermined transport direction (T), having a plurality of cutting elements which are suitable and intended for making a plurality of cuts extending in the transport direction (T) in the foam carrier, wherein the foam carrier being cut by said cuts into a plurality of foam carrier strips completely separated from each other in a direction perpendicular to said transport direction, wherein the apparatus comprising first deflecting device for moving at least a first foam carrier strip (10a) relative to a second foam carrier strip (10b) in a direction perpendicular to said transport direction so as to increase a distance between said two foam carrier strips (10a, 10b) in said perpendicular direction, wherein said direction being perpendicular to a plane formed by the transport direction on the one hand and the width direction on the other hand,
**characterized in that**
the apparatus comprises a material applying device which applies at least one material to at least one surface of at least one foam carrier strip, and the apparatus comprises a second deflecting device which is arranged downstream of the first deflection device in the transport direction and which is suitable and intended for moving the first foam carrier strip (10a) with respect to the second foam carrier strip (10b) in the direction perpendicular to the transport direction, so as to reduce again a distance between these two foam carrier strips (10a, 10b) in this perpendicular direction.

## Revendications

1. Procédé de fabrication d'une bande d'étanchéité, dans lequel un support de mousse (10) est transporté dans une direction de transport (T) prédéfinie et au moins une découpe est pratiquée dans ledit support de mousse, qui s'étend dans ladite direction de transport et au moins deux bandes de support de mousse (10a, 10b) totalement séparées l'une de l'autre avec au moins une surface extérieure sont produites par ladite découpe, dans lequel un espacement entre ladite première bande de support de mousse (10a) et la deuxième bande de support de mousse (10b) est augmentée, dans lequel au moins une desdites deux bandes de support de mousse est transportée au moins par intermittence dans une direction autre que celle de l'autre bande de support de mousse (10b),
**caractérisé en ce que**
un espacement des au moins deux bandes de support de mousse est augmenté dans une direction, qui est perpendiculaire à un plan, lequel est formé par la direction de transport d'une part et la direction de largeur d'autre part,
un matériau est appliqué sur au moins une surface extérieure d'au moins une des deux bandes de support de mousse (10a, 10b), et
les bandes de support de mousse sont rassemblées à nouveau après qu'elles ont été éloignées l'une de l'autre.

2. Procédé selon la revendication 1,
**caractérisé en ce que**
le matériau est choisi parmi un groupe de matériaux, lequel contient des bandes de film, des bandes de ruban adhésif ou des milieux liquides de type colle.

3. Procédé selon au moins l'une quelconque des revendications précédentes,
**caractérisé en ce que**
la surface extérieure est une surface extérieure, produite par la découpe, de la bande de support de mousse.

4. Procédé selon au moins l'une quelconque des revendications précédentes,
**caractérisé en ce que**
au moins une des deux bandes de support de mousse (10a) est convoyée dans une direction (Y) perpendiculaire à la direction de transport.

5. Procédé selon au moins l'une quelconque des revendications précédentes,
**caractérisé en ce que**
un espacement entre les deux bandes de support de mousse est à nouveau réduit à un moment ultérieur.

6. Procédé selon au moins l'une quelconque des revendications précédentes,
**caractérisé en ce que**
une pluralité de découpes parallèles les unes par rapport aux autres est pratiquée dans le support de mousse et une pluralité de bandes de support de mousse (10a, 10b, 10c..) est ainsi produite.

7. Procédé selon au moins l'une quelconque des revendications précédentes,
**caractérisé en ce que**
une première portion de ladite pluralité de bandes de support de mousse est éloignée d'une deuxième portion de ladite pluralité de bandes de support de mousse.

8. Procédé selon au moins l'une quelconque des revendications précédentes,
**caractérisé en ce que**
une succession des bandes de support de mousse (10a, 10b, 10c..) est modifiée dans une direction située de manière perpendiculaire par rapport à la direction de transport.

9. Dispositif (1) de fabrication d'une bande d'étanchéité avec un système de transport, lequel est adapté pour et se destine à transporter un support de mousse le long d'une direction de transport (T) prédéfinie, avec une pluralité d'éléments tranchants, qui sont adaptés pour et se destinent à pratiquer une pluralité de découpes s'étendant dans la direction de transport (T) dans le support de mousse, dans lequel le support de mousse est découpé par lesdites découpes en une pluralité de bandes de support de mousse totalement séparées les unes des autres dans une direction située de manière perpendiculaire par rapport à la direction de transport, dans lequel le dispositif présente un premier système de renvoi, lequel déplace au moins une première bande de support de mousse (10a) par rapport à une deuxième bande de support de mousse (10b) dans une direction située de manière perpendiculaire par rapport à la direction de transport pour agrandir ainsi un espacement desdites deux bandes de support de mousse (10a, 10b) dans ladite direction perpendiculaire, dans lequel ladite direction est perpendiculaire à un plan, lequel est formé par la direction de transport d'une part et la direction de largeur d'autre part, **caractérisé en ce que**
le dispositif présente un système d'introduction de matériau, lequel applique au moins un matériau sur au moins une surface d'au moins une bande de support de mousse et le dispositif présente un deuxième système de renvoi, lequel est disposé après le premier système de renvoi dans la direction de transport et lequel est adapté pour et se destine à déplacer la première bande de support de mousse (10a) par rapport à la deuxième bande de support de mousse (10b) dans la direction située de manière perpendiculaire par rapport à la direction de transport pour ainsi réduire à nouveau un espacement desdites deux bandes de support de mousse (10a, 10b) dans ladite direction perpendiculaire.
